(19) **Europäisches Patentamt European Patent Office Office européen des brevets**

(11) **EP 2 606 954 B1**

(12) **EUROPEAN PATENT SPECIFICATION**

(45) Date of publication and mention
of the grant of the patent:
**07.12.2016 Bulletin 2016/49**

(21) Application number: **11818093.4**

(22) Date of filing: **08.08.2011**

(51) Int Cl.:
*B01D 69/12* (2006.01)   *B01J 47/12* (2006.01)
*B32B 3/00* (2006.01)   *B32B 5/24* (2006.01)
*B32B 5/26* (2006.01)   *C08J 5/22* (2006.01)

(86) International application number:
**PCT/JP2011/068020**

(87) International publication number:
**WO 2012/023451 (23.02.2012 Gazette 2012/08)**

(54) **ION EXCHANGE MEMBRANE AND METHOD FOR PRODUCING SAME**

IONENAUSTAUSCHMEMBRAN UND HERSTELLUNGSVERFAHREN DAFÜR

MEMBRANE ÉCHANGEUSE D'IONS ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2010 JP 2010184132**

(43) Date of publication of application:
**26.06.2013 Bulletin 2013/26**

(73) Proprietors:
• **Astom Corporation
Minato-ku
Tokyo (JP)**
• **ASAHI KASEI KABUSHIKI KAISHA
Tokyo 101-8101 (JP)**

(72) Inventors:
• **KISHINO, Masayuki
Shunan-shi
Yamaguchi 745-8648 (JP)**
• **ARITOMI, Toshio
Shunan-shi
Yamaguchi 745-8648 (JP)**

• **YOSHIE, Kiyotaka
Shunan-shi
Yamaguchi 745-8648 (JP)**
• **YOSHIDA, Minoru
Tokyo 101-8101 (JP)**
• **MIYA, Tatsuhiko
Tokyo 101-8101 (JP)**
• **UENO, Ikuo
Tokyo 101-8101 (JP)**

(74) Representative: **Duckworth, Timothy John
J A Kemp
14 South Square
Gray's Inn
London WC1R 5JJ (GB)**

(56) References cited:
**WO-A1-2004/094136     WO-A1-2006/068100
JP-A- 2 269 745     JP-A- 60 238 103
JP-A- 63 039 930**

**Description**

Technical Field:

This invention relates to an ion-exchange membrane using a nonwoven fabric sheet as a base sheet and to a process for producing the same.

Background Art:

Ion-exchange membranes have been industrially used as electrolytic membranes for electrodialysis in the step of desalting for producing salts and foods, and in the fuel cells. The ion-exchange membranes have a structure in which a base sheet that works as a reinforcing material is provided as a core material in the ion-exchange resin so as to maintain a predetermined membrane strength.

There has heretofore been known an ion-exchange membrane using a porous resin sheet as the base sheet (see, for example, patent document 1). In the ion-exchange membrane of this form, voids in the porous resin sheet which is the base material are filled with the ion-exchange resin offering an advantage of a low membrane resistance. However, the porous resin sheet is so expensive that study has been forwarded to use any other inexpensive material as a base sheet for reinforcement.

A nonwoven fabric sheet is a representative example of the inexpensive base sheet, and there has also been known an ion-exchange membrane using the nonwoven fabric sheet as the base sheet. Further, to lower the cost of production, there has also been proposed a method of producing an ion-exchange membrane by coating a porous base sheet such as of nonwoven fabric with an organic solvent solution of an ion-exchange resin followed by drying (see, for example, patent document 2). According to this method, the organic solvent solution of the ion-exchange resin permeates into the nonwoven fabric sheet and, therefore, a coating of the ion-exchange resin is formed in a manner of biting into the nonwoven fabric, featuring a large strength of adhesion between the ion-exchange resin layer and the nonwoven fabric sheet and effectively preventing the two from peeling off.

Despite of its advantage of low cost, however, the nonwoven fabric sheet has a small strength, and the ion-exchange membrane using the nonwoven fabric sheet as the base sheet has such defects as poor dimensional stability and poor shape stability.

Further, when the nonwoven fabric sheet is used as a reinforcing sheet, there often occur such problems that the resistance of the ion-exchange membrane increases, the ion-exchange resin layer becomes irregular due to irregularity in the nonwoven fabric causing the ion-exchange membrane to lose stability in its properties, and the ion-exchange membrane expands irregularly when it has swollen giving rise to the occurrence of undulation. That is, if the ion-exchange membrane is produced by the coating with the organic solvent solution of the ion-exchange resin as disclosed in the above patent document 1, the ion-exchange resin solution permeates into voids in the nonwoven fabric. To form an ion-exchange resin layer of a predetermined thickness on the surface of the nonwoven fabric, therefore, it becomes necessary to apply the organic solvent solution of the ion-exchange resin in large amounts resulting in a considerable increase in the thickness of the ion-exchange resin layer formed on the surface of the nonwoven fabric. Besides, since the ion-exchange resin layer is formed by applying the organic solvent solution onto the porous nonwoven fabric, bubbles infiltrate into the ion-exchange resin layer. Therefore, not only the resistance of the obtained ion-exchange membrane increases but also the membrane greatly swells when it comes in contact with the electrolyte giving rise to the occurrence of undulation. The undulation becomes a cause of leakage of the electrolyte when electrolysis or electrodialysis is conducted by using the ion-exchange membrane, and the ion-exchange membrane fails to effectively exhibit its function. US 2008/0138596 describes a support substrate for separation membrane.

Prior Art Documents:

Patent Documents:

Patent document 1: JP-A-64-22932
Patent document 2: JP-A-2-265929

Outline of the Invention:

Problems that the Invention is to Solve:

It is, therefore, an object of the present invention to provide an ion-exchange membrane using an inexpensive nonwoven fabric sheet as a base sheet, featuring excellent properties such as strength, dimensional stability and shape stability, effectively suppressing undulation when it is brought into contact with electrolyte, and having a low membrane resistance and stable properties, and to provide a method of producing the ion-exchange membrane.

Means for Solving the Problems:

According to the present invention, there is provided a process for producing an ion-exchange membrane comprising steps of: providing a nonwoven fabric sheet having a fiber layer structure that includes long filament layers of a fiber diameter of 8 to 30 um on both surfaces thereof and an extra-fine filament layer of a fiber diameter of not more than 5 $\mu$m as an intermediate layer formed by melt-adhesion of fibers between said long filament layers, a strippable film, and an organic solvent solution of an ion-exchange resin or an ion-exchange resin precursor that is capable of introducing ion-exchange groups, wherein said organic solvent solution has a viscosity (25°C) in a range of 1.0 to 60 dPa·s; applying said organic solvent solution onto one surface of said strippable film to form an applied layer of the ion-exchange resin or the ion-exchange resin precursor; overlapping said nonwoven fabric sheet on said applied layer; forming a coating of the ion-exchange resin or the ion-exchange resin precursor by drying said applied layer in a state where said nonwoven fabric sheet has been overlapped thereon; and stripping said strippable film; wherein when an organic solvent solution of said ion-exchange resin precursor is used as said organic solvent solution, provision is, further, made of a step of introducing ion-exchange groups into said ion-exchange resin precursor after the coating of the ion-exchange resin precursor has been formed but before stripping said strippable film.

The present invention also provides an ion-exchange membrane comprising a nonwoven fabric sheet and an ion-exchange resin coating formed on one surface of said nonwoven fabric sheet, said nonwoven fabric sheet having a fiber layer structure that includes long filament layers of a fiber diameter of 8 to 30 $\mu$m on both surfaces thereof and an extra-fine filament layer of a fiber diameter of not more than 5 $\mu$m as an intermediate layer formed by melt-adhesion of fibers between said long filament layers; wherein said ion-exchange membrane has a burst strength of not less than 0.1 MPa, an electric resistance (25°C) of not more than 5 $\Omega$cm$^2$, and an amount of water permeation therethrough of not more than 100 ml/m$^2$.h; and wherein said ion-exchange membrane is obtainable by the process of the present invention.

According to the present invention, it is desired that the ion-exchange membrane has a rate of area change of not more than 2% and a rate of thickness change of not more than 10% in a dry state of after it is held in a dry atmosphere of 50°C for 24 hours and in a wet state of after it is dipped in pure water of 25°C for 24 hours, and a surface roughness Ra of not more than 10 $\mu$m on the surface of the ion-exchange resin coating of the ion-exchange membrane in the wet state.

Effects of the Invention:

The ion-exchange membrane of the present invention uses a nonwoven fabric as a base sheet offering an advantage of a very low cost. Here, the nonwoven fabric has a fiber layer structure that includes long filament layers (layers of filaments of a diameter of 8 to 30 $\mu$m) on both surfaces thereof, and an extra-fine filament layer (layer of filament of a diameter of not more than 5 $\mu$m) as an intermediate layer formed by melt-adhesion of fibers between the two long filament layers, effectively eliminating the defect specific to the ion-exchange membranes that use the nonwoven fabric as the base sheet.

That is, in the nonwoven fabric, in general, the fibers have not been woven accounting for small strength, i.e., low dimensional stability and poor shape stability. According to the present invention, however, the extra-fine filament layer is formed as an intermediate layer relying on melt-adhesion of fibers. Namely, the extra-fine filament layer works as a reinforcing layer contributing to increasing the strength, dimensional stability and shape stability.

Besides, formation of the extra-fine filament layer limits the ion-exchange resin from permeating or biting into voids in the nonwoven fabric sheet. As a result, the ion-exchange resin coating is firmly fixed to the nonwoven fabric sheet which is the base sheet; i.e., the ion-exchange resin coating formed on the surface of the nonwoven fabric sheet assumes a thin and uniform thickness exhibiting stable properties without dispersion and exhibiting decreased membrane resistance.

According to the production method of the present invention, further, the nonwoven fabric sheet of the above-mentioned structure is dried in a state of being overlapped on the layer of the organic solvent solution of the ion-exchange resin or the precursor thereof (hereinafter simply referred to as organic solvent solution) that is applied to thereby form the coating of the ion-exchange resin or the precursor thereof. Therefore, the organic solvent solution is limited from permeating into the nonwoven fabric by the intermediate layer of dense and fine filament in the nonwoven fabric sheet, making it possible to reliably limit to a predetermined level the amount of the ion-exchange resin that permeates into the nonwoven fabric. Besides, bubbles that evolve due to voids in the nonwoven fabric sheet quickly disperse to the exterior through the nonwoven fabric sheet, and are effectively prevented from mixing into the layer that is applied.

It is, therefore, allowed to form the ion-exchange resin coating on the surface of the nonwoven fabric sheet using the organic solvent solution in a decreased amount, the ion-exchange resin coating assuming a decreased and uniform thickness. Thus, it is made possible to produce, efficiently and in short periods of time, the ion-exchange membrane that exhibits stable properties without dispersion and decreased membrane resistance, swelling little even when it is brought in contact with the electrolyte and effectively preventing the occurrence of undulation.

If, for example, an ordinary nonwoven fabric sheet without having a dense and fine filament layer as the intermediate layer is used, the organic solvent solution of the ion-exchange resin or the precursor thereof cannot be limited from permeating. Therefore, the organic solvent solution deeply permeates over the whole nonwoven fabric sheet. In order to form a layer of the ion-exchange resin of a small thickness on the nonwoven fabric sheet, therefore, the ion-exchange resin must be used in large amounts resulting in not only an increase in the membrane resistance but also an increase in the swelling when the nonwoven fabric sheet is brought into contact with the electrolyte giving rise to the occurrence of undulation of the membrane. Besides, the depth to which the organic solvent solution permeates in the nonwoven fabric does not remain constant and, therefore, the ion-exchange membrane exhibits dispersing properties.

The amount of the organic solvent solution that permeates into the nonwoven fabric can be minimized by using the organic solvent solution of a high viscosity. In this case, however, a very extended period of time is necessary for so permeating the organic solvent solution into the nonwoven fabric sheet that a large junction strength is obtained between the nonwoven fabric sheet and the ion-exchange resin layer, causing a very decrease in the production efficiency. Besides, the organic solvent solution does not permeate in a constant amount into the nonwoven fabric but permeates in unstable amounts still leaving the problem in that the obtained ion-exchange membrane exhibits dispersing properties.

Despite of using the nonwoven fabric sheet having a dense and staple layer as the intermediate layer, further, when the ion-exchange resin coating is formed on the nonwoven fabric sheet by applying the organic solvent solution of the ion-exchange resin or the precursor thereof thereon followed by drying, bubbles evolve in the layer that is formed by applying the organic solvent solution onto the porous nonwoven fabric, the bubbles without being permitted to escape. Accordingly, the ion-exchange resin coating that is formed contains much bubbles resulting in the formation of the ion-exchange membrane having a high resistance and exhibiting unstable properties.

According to the present invention, on the other hand, use is made of a nonwoven fabric sheet having a dense and extra-fine filament layer as the intermediate layer, and the nonwoven fabric sheet is dried in a state of being overlapped on a layer formed by applying an organic solvent solution of an ion-exchange resin (or a precursor thereof) to form a coating of the ion-exchange resin (or the precursor thereof) solving all of the above-mentioned problems.

Brief Description of the Drawings:

[Fig. 1] is a sectional view showing the structure of layers of an ion-exchange membrane of the present invention.
[Fig. 2] is a view illustrating a process for producing the ion-exchange membrane of the present invention.

Mode for Carrying Out the Invention:

<Structure of the ion-exchange membrane>

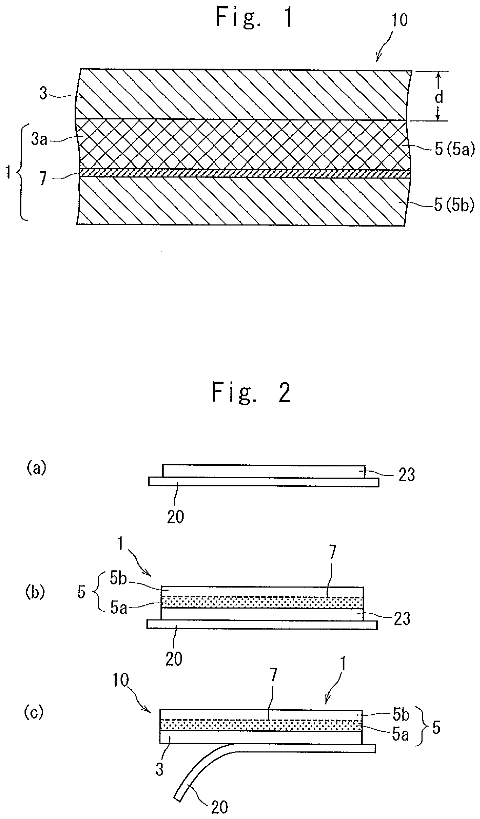

Referring to Fig. 1, the ion-exchange membrane of the present invention generally designated at 10 includes a nonwoven fabric sheet 1 as the base sheet, and an ion-exchange resin coating 3 formed on one surface of the nonwoven fabric sheet 1 by a coating method.

In the ion-exchange membrane 10 of this structure, the nonwoven fabric sheet 1 has long filament layers 5 (5a, 5b) on both surfaces thereof, and an extra-fine filament layer 7 as the intermediate layer between the long filament layers 5a and 5b, the extra-fine filament layer 7 firmly holding the long filament layers 5a and 5b relying on the melt-adhesion of fibers and being more dense than the long filament layers 5a and 5b.

That is, in the invention, the ion-exchange resin coating 3 is formed on one long filament layer 5a of the nonwoven fabric sheet 1 of the above structure by applying an organic solvent solution of an ion-exchange resin or an ion-exchange resin precursor onto the long filament layer 5a. Therefore, the ion-exchange resin is permeating into the voids of the long filament layer 5a and, therefore, the ion-exchange resin coating 3 is firmly fixed to the long filament layer 5a. Besides, the ion-exchange resin that may deeply permeate is shut off by the dense and extra-fine filament layer 7 and does not reach the long filament layer 5b on the opposite side.

Here, in Fig. 1, the ion-exchange resin that is permeating into the long filament layer 5a is designated at 3a.

Nonwoven fabric sheet 1:

In the present invention, the long filament layers 5 (5a, 5b) of the nonwoven fabric sheet 1 are formed of fibers of a thermoplastic resin having a fiber diameter in a range of 8 to 30 $\mu$m and, preferably, 10 to 20 $\mu$m relying, for example, upon a spun-bond method. That is, the layers 5 formed by using long filaments of the above fiber diameters make it possible to form voids of suitable sizes, to permeate an ion-exchange resin of a suitable amount into the long filament layer 5a, to firmly hold the ion-exchange resin coating 3 and to reinforce the ion-exchange membrane 10. For example, use of the fiber having fiber diameter larger than the above range impairs the smoothness of the surface resulting in a decrease in the anchoring effect and, therefore, making it difficult to firmly hold the ion-exchange resin coating 3. Further, if the fiber diameter is smaller than the above range, it becomes difficult to form the extra-fine filament layer 7 based on the melt-adhesion of fibers. Besides, the strength of the nonwoven fabric sheet 1 decreases, and the ion permeability of the obtained ion-exchange membrane decreases, too.

It is, further, desired that the long filament layer 5a is formed in a weight of 3 to 50 g/m$^2$. That is, the weight of not less than 3 g/m$^2$ is desired since voids become small among the fibers, the fibers firmly bond to the extra-fine filament layer 7 to reinforce the nonwoven fabric sheet 1, and the anchoring effect is enhanced to firmly hold the ion-exchange resin coating 3.

Further, the weight of the long filament layer 5a of not more than 50 g/m$^2$ is desired since the amount of the ion-exchange resin that infiltrates into the layer 5a can be suppressed when the ion-exchange resin coating 3 is formed, the ion-exchange resin needs be used in small amounts for forming the ion-exchange resin coating 3 of a suitable thickness, and the membrane resistance of the obtained ion-exchange membrane 10 can be lowered.

On the other hand, there is no specific limitation on the weight of the long filament layer 5b on the side where no ion-exchange resin coating 3 is formed. For example, the weight thereof may be considerably smaller than that of the long filament layer 5a but should desirably be nearly the same as that of the long filament layer 5a. That is, upon selecting the weight to be nearly the same between the long filament layer 5a on the side where the ion-exchange resin coating 3 is formed and the long filament layer 5b on the side where no ion-exchange resin coating 3 is formed, it is allowed to form the ion-exchange resin coating 3 on the long filament layer 5 of either side facilitating the production of the ion-exchange membrane 10. Further, upon selecting the thickness of the long filament layer 5b to be nearly the same as that of the long filament layer 5a, the ion-exchange membrane 10 having an increased strength can be realized without unnecessarily increasing the thickness thereof.

The extra-fine filament layer 7 joined to the long filament layers 5a, 5b based on the melt-adhesion of fibers is formed of a fiber having a fiber diameter of not more than 5 $\mu$m and, desirably, not more than 3 $\mu$m. That is, use of such an extra-fine filament enables the extra-fine filament layer 7 to be dense layer as compared to the long filament layers 5. When the ion-exchange resin coating 3 is formed, therefore, the extra-fine filament layer 7 shuts off the permeation of the ion-exchange resin limiting the amount of the ion-exchange resin that permeates and, as a result, making it possible to avoid an increase in the membrane resistance as well as to stabilize the membrane properties. This, further, enables the long filament layers 5 to be firmly held, and the nonwoven fabric sheet 1 (ion-exchange membrane 10) to possess increased strength, improved dimensional stability and shape stability, effectively preventing undulation caused by the swelling of the ion-exchange resin when the ion-exchange membrane 10 comes in contact with the electrolyte. For example, if there is used a fiber having a fiber diameter larger than the above range, the layer 7 does not become dense and the above-mentioned advantages are not obtained.

It is desired that the extra-fine filament layer 7 has a fiber diameter of not less than 0.05 $\mu$m and, specifically, not less than 1 $\mu$m. If the fiber diameter is not less than 0.05 $\mu$m, the extra-fine filament layer does not easily turn into a film and the membrane resistance does not easily increase, either, which is desirable. Namely, the membrane resistance can be lowered without greatly decreasing the ion permeability of the ion-exchange membrane 10.

As the staple layer 7, there is preferably used a fiber obtained by the melt-blown method. The fiber obtained by the melt-blown method is lowly crystalline, favorably heat-adheres to the long filament layers 5, enabling a large strength and dimensional stability to be easily obtained. It is desired that the extra-fine filament layer 7 has a weight of not less than 1 g/m$^2$. That is, if the weight is not less than 1 g/m$^2$, the extra-fine filament layer 7 does not become sparse, and the above-mentioned effect can be exhibited to a sufficient degree. Further, if the weight so increases that the extra-fine filament layer 7 becomes unnecessarily thick, then the obtained ion-exchange membrane 10 may exhibit an increased membrane resistance, a decreased ion permeability and a decreased strength. It is, therefore, desired that the extra-fine filament layer 7 has a thickness in a range of 0.1 to 15 $\mu$m and, specifically, 0.5 to 10 $\mu$m.

As the fibers for forming the long filament layers 5 and the extra-fine filament layer 7, there can be used thermoplastic resin fibers; i.e., known thermoplastic resin fibers can be used so far as they have the above-mentioned fiber diameters.

As the thermoplastic resins for forming such fibers, there can be exemplified olefin resins which are homopolymers or copolymers of α-olefines such as ethylene, propylene, 1-butene, 1-pentene, 1-hexene, 3-methyl-1-butene, 4-methyl-1-pentene and 5-methyl-1-heptene; vinyl chloride resins such as polyvinyl chloride, vinyl chloride/vinyl acetate copolymer; vinyl chloride/vinylidene chloride copolymer and vinylchloride/olefin copolymer; fluorine-contained resins such as polytetrafluoroethylene, polychlorotrifluoroethylene, vinylidene polyfluoride, tetrafluoroethylene/hexafluoropropylene copolymer, tetrafluoroethylene/perfluoroalkylvinyl ether copolymer and tetrafluoroethylene/ethylene copolymer; polyamide resins such as nylon 6 and nylon 66; and polyester resins such as polyethylene terephthalate, polybutylene terephthalate and polytrimethylene terephthalate.

In the present invention, it is desired to use the polyester resin fiber and the olefin resin fiber (specifically, polyethylene fiber or polypropylene fiber) from the standpoint of membrane properties (mechanical strength, chemical stability, resistance against pharmaceuticals) when used as the ion-exchange membrane, and it is most desired to use the polyethylene fiber from the standpoint of melt-adhering property.

The filament layers 5 and the staple layer 7 may be formed of different fibers. From the standpoint of their melt-adhering property, however, it is desired that the two are formed of a thermoplastic resin fiber of the same kind of polymer.

From the standpoint of preventing the filament layers 5 from turning into films at the time of melt-adhering the long filament layers 5 and the extra-fine filament layer 7 together, further, there can be used a polymer for forming the extra-fine filament layer 7 having a melting point lower than a melting point of the polymer for forming the long filament layers 5.

Here, the nonwoven fabric sheet 1 having the above long filament layers 5 and the extra-fine filament layer 7 is, usually, produced in a manner as described below.

Onto a web (corresponds to the long filament layer 5) of filaments having a predetermined fiber diameter formed by, for example, the spun-bond method, the extra-fine filament layer 7 is formed by the melt-blown method and, next, the same filaments as those described above are blown onto the extra-fine filament layer 7. The thus obtained sheet of laminated fiber layers is adhered together by the application of heat and pressure to thereby obtain the desired nonwoven fabric sheet 1. The adhesion by the application of heat and pressure is, desirably, conducted through a calender treatment by using flat rolls, the temperature of the calender treatment being, desirably, not lower than a glass transition point of the melt-blown fiber but lower than a melting point thereof and, more desirably, being lower by 10 to 100°C than the melting point of the filaments. This makes it possible to effectively prevent the long filament layers 5 and the extra-fine filament layers 7 from turning into films.

The fiber diameters and weight can be adjusted by known means.

Ion-exchange resin coating 3:

In the present invention, the ion-exchange resin coating 3 is formed on the long filament layer 5 (5a) of the nonwoven fabric sheet 1, and comprises an ion-exchange resin that can be applied by being dissolved in an organic solvent. Namely, the ion-exchange resin coating 3 has a structure in which an ion-exchange group that exhibits ion-exchange capacity or, concretely, a cation-exchange group or an anion-exchange group is introduced into a hydrocarbon resin such as a polymer obtained by polymerizing a monomer having an ethylenically unsaturated double bond, such as vinyl, styrene or acrylics, or a polymer that includes an aromatic ring in the main chain thereof, such as polysulfone, polyphenylene sulfide, polyether ketone, polyetherether ketone, polyetherimide, polyphenylene oxide, polyethersulfone, or polybenzimidazole.

Further, the ion-exchange group is a functional group that could become a negative or positive electric charge in an aqueous solution, and may be a sulfonic acid group, a carboxylic acid group or a phosphonic acid group in the case of the cation-exchange group and is, usually and desirably, the sulfonic acid group which is a strong acid group. In the case of the anion-exchange group, it may be primary to tertiary amino group, quaternary ammonium group, pyridyl group, imidazole group or quaternary pyridinium group and is, usually and desirably, the quaternary ammonium group or the quaternary pyridinium group which is strongly basic.

As the cation-exchange resin, there can be exemplified monomers of the type of sulfonic acid such as α-halogenated vinylsulfonic acid, styrenesulfonic acid and vinylsulfonic acid, monomers of the type of carboxylic acid such as methacrylic acid, acrylic acid and maleic anhydride, monomers of the type of phosphonic acid such as vinylphosphoric acid, and polymers obtained by polymerizing the salts thereof and esters thereof.

As the anion-exchange resin, there can be exemplified amine-type monomers such as vinylbenzyltrimethylamine and vinylbenzyltriethylamine, nitrogen-containing heterocyclic monomers such as vinylpyridine and vinylimidazole, and polymers obtained by polymerizing the salts thereof and esters thereof.

The ion-exchange resins may have a crosslinked structure so far as they can be dissolved in an organic solvent to prepare a solution thereof. The ion-exchange resins may have been crosslinked with a polyfunctional monomer as represented by a divinyl compound such as divinylbenzene, divinylsulfone, butadiene, chloroprene, divinylbiphenyl, trivinylbenzenes, divinylnaphthaline, diallylamine or divinylpyridine. Or the ion-exchange resins may be copolymers obtained by copolymerizing other monomers such as styrene, acrylonitrile, methylstyrene, acrolein, methylvinylketone and vinylbiphenyl.

It is desired that the ion-exchange resins have ion-exchange capacities in a range of 0.5 to 3.0 meq/g and, specifically, 0.8 to 2.0 meq/g. With the ion-exchange capacity being not less than 0.8 meq/g, the membrane resistance becomes sufficiently low and high membrane properties are obtained. With the ion-exchange capacity being not more than 2.0 meq/g, the ion-exchange resin is suppressed from dissolving in the electrolyte and is, further, suppressed from swelling too much. Therefore, the shape changes little and the membrane little undergoes the stripping. It is, therefore, desired to so introduce the cation-exchange groups or the anion-exchange groups that the ion-exchange capacity is realized as described above.

The ion-exchange resin coating 3 that comprises the above ion-exchange resin is formed on the surface layer 5a of long filaments. Here, the ion-exchange resin forming the coating 3 is biting into the interior (voids) of the surface layer 5a. Though the whole thickness cannot be strictly specified, it is desired that the thickness d of the portion present on the surface layer 5a is in a range of, for example, about 1 to about 50 $\mu$m so that the ion-exchange capacity of the obtained ion-exchange membrane 10 is about 0.05 to about 2 meq/g and, specifically, about 0.1 to about 1 meq/g. Namely, with the thickness being not less than 1 $\mu$m, the ion-exchange resin coating 3 assumes a uniform thickness suppressing dispersion in the membrane properties and stabilizing membrane properties. With the thickness being not more than 50 $\mu$m, further, swelling does not occur despite of an increase in the ion-exchange capacity and the shape of the membrane does not vary suppressing a decrease in the membrane properties.

In the ion-exchange membrane 10 of the invention having the structure as described above, the ion-exchange resin coating is formed on the surface of the highly strong nonwoven fabric sheet 1 that has the dense and extra-fine filament layer 7 as an intermediate layer between the long filament layers 5a and 5b. Therefore, the strength is so large that the burst strength is not less than 0.1 MPa featuring excellent dimensional stability and shape stability. Being coated with the ion-exchange resin, further, the ion-exchange membrane 10 of the present invention suppresses the permeation of water; i.e., the amount of water permeation therethrough is measured to be not more than 100 ml/m$^2$·h and, specifically, not more than 50 ml/m$^2$·h.

Further, since the ion-exchange resin is suitably limited from permeating into the nonwoven fabric sheet 1, there is no dispersion in the membrane properties; i.e., stable properties are exhibited and, besides, the membrane resistance is very small. Specifically, the ion-exchange membrane 10 of the present invention produced by the following method effectively suppresses the bubbles from being mixed into the ion-exchange resin coating 3 and, therefore, has an electric resistance (25°C) of not more than 5 $\Omega$cm$^2$.

<Production of the ion-exchange membrane 10>

The ion-exchange membrane 10 of the above structure is produced by forming the ion-exchange resin layer (ion-exchange resin coating 3) on the surface of the above nonwoven fabric sheet 1 (long filament layer 5a) by the coating method.

The above-mentioned organic solvent solution of the ion-exchange resin is used for forming the ion-exchange resin coating 3 by the coating method. It is also allowable to use the organic solvent solution of the ion-exchange resin precursor in its place.

The ion-exchange resin precursor is a polymer having a functional group capable of introducing an ion-exchange group. As the polymer having a functional group capable of introducing a cation-exchange group, there can be exemplified those polymers obtained by polymerizing such monomers as styrene, vinyltoluene, vinylxylene, $\alpha$-methylstyrene, vinyl-naphthalene and $\alpha$-halogenated styrenes. As the polymer having a functional group capable of introducing an anion-exchange group, there can be exemplified those polymers obtained by polymerizing such monomers as styrene, vinyl-toluene, chloromethylstyrene, vinylpyridine, vinylimidasole, $\alpha$-methylstyrene and vinylnaphthalene.

The ion-exchange resin precursors may be those into which the crosslinked structure has been introduced by the copolymerization of a polyfunctional monomer such as the above-mentioned divinyl compound and the like so far as they can be dissolved in the organic solvent, and may be, further, copolymerized with other monomers, as required.

When the organic solvent solution of the ion-exchange resin precursor is used, it becomes necessary to introduce the ion-exchange groups in the final step.

As the organic solvent used for preparing the organic solvent solution of the ion-exchange resin or the ion-exchange resin precursor, there can be used any organic solvent without limitation provided it is capable of dissolving the above polymers. From the standpoint of easy removal by drying, however, there can be used ethylene chloride, chloroform, tetrahydrofurane, dimethylformamide, N-methylpyrrolidone and methyl alcohol in one kind or in the form of a mixed solvent of two or more kinds thereof.

The organic solvent should be used in an amount that is suited for being applied by means that will be described later and should be used, for example, in such an amount that the organic solvent solution assumes a viscosity (25°C) in a range of 1.0 to 60 dPa·s. If the viscosity is too high, the permeation becomes slow when it is applied onto the nonwoven fabric consuming an extended period of time for obtaining a sufficiently large adhesiveness and lowering the productivity. If the viscosity is too low, on the other hand, the resin solution permeates into the nonwoven fabric as well as into the intermediate layer making it difficult to form a coating of the ion-exchange resin on the surface. From the standpoint of productivity, not less than 0. 5 m/min and, specifically, not less than 1 m/min is preferred.

Referring to Fig. 2, the ion-exchange resin coating 3 is formed on the nonwoven fabric sheet 1 by using the ion-exchange resin prepared as described above or by using the organic solvent solution of the ion-exchange resin.

First, a strippable film 20 is provided and on which the organic solvent solution for forming a coating prepared above is applied to thereby form a layer 23 of the organic solvent solution (see Fig. 2(a)). The layer 23 applied here will be transferred onto the surface on one side of the nonwoven fabric sheet 1 to form the ion-exchange resin coating 3.

The strippable film 20 is the one that does not adhere to the ion-exchange resin coating 3 that is formed last, and may be of any kind and may have any thickness provided it does not dissolve in the organic solvent in the layer 23 and easily peels off at the final step. Usually, however, a polyester film such as of polyethylene terephthalate is desirably used from the standpoint of excellent durability, mechanical strength and repetitive use.

The organic solvent solution can be applied by known means such as doctor-blade coating, knife coating, roll coating or bar coating. The thickness of application thereof when dried is about the thickness consisting of the thickness d of the desired ion-exchange resin coating 3 and the thickness of the long filament layer 5a in the nonwoven fabric sheet 1.

After the layer 23 of the organic solvent solution is formed as described above, the nonwoven fabric sheet 1 is overlapped and is held thereon prior to drying the layer 23 (see Fig. 2(b)). In this case, the nonwoven fabric sheet 1 is so overlapped that the filament layer 5a of the nonwoven fabric sheet 1 faces the layer 23. If the filament layers 5a and 5b have been formed having the same thickness, then either side thereof may be overlapped to face the layer 23.

At the time of overlapping, the layer 23 is in a wet state of not being dried. Therefore, the organic solvent solution forming the layer 23 gradually permeates into voids in the long filament layer 5a in the nonwoven fabric sheet 1. The permeation, however, is shut off by the dense and extra-fine filament layer 7 and does not reach the interior of the long filament layer 5b on the opposite side. Further, bubbles mix as the organic solvent solution permeates into the long filament layer 5a. However, since the upper side is the fiber layer which is an open system, the bubbles quickly escape from the upper side; i.e., it is allowed to effectively prevent the bubbles from mixing into the ion-exchange resin coating 3 that is finally formed.

The overlapping is suitably conducted under the application of pressure accelerating the permeation of the organic solvent solution into the filament layer 5a of the nonwoven fabric sheet 1. The pressure can be applied relying on, for example, the roller press and is, usually, set to lie in a range in which the layer 23 that is applied will not be excessively compressed.

In the present invention, the viscosity of the organic solvent solution is set to lie in the above-mentioned range enabling the step of overlapping to be conducted in a short period of time, enabling the nonwoven fabric sheet to be laminated by overlapping at an increased rate and, therefore, the productivity is improved.

The nonwoven fabric sheet 1 is overlapped as described above so that the upper part of the layer 23 infiltrates into the filament layer 5a of the nonwoven fabric sheet 1. Thereafter, the layer 23 is dried to remove the organic solvent; i.e., the wet layer 23 is solidified to thereby form the ion-exchange resin coating 3. The drying will be in the form of drying with heating, drying in a reduced pressure or drying by blowing the air and at such a temperature that the nonwoven fabric sheet 1 will not be melted to turn into a film.

When the layer 23 is formed by using the organic solvent solution of the ion-exchange resin precursor, the layer obtained by the above drying is a layer of the ion-exchange resin precursor. It is, therefore, necessary to conduct the treatment to introduce the ion-exchange groups after the drying.

The ion-exchange groups are introduced by a known method such as sulfonation, phosphoniation or hydrolysis when, for example, a cation-exchange membrane is to be produced, or amination or alkylation when an anion-exchange membrane is to be produced. That is, a solution of a treating agent for conducting the above treatment is brought into contact with the coating of the ion-exchange resin precursor that is obtained by drying to conduct the reaction for introducing the exchange groups followed by washing and drying to form the ion-exchange resin coating 3.

After the ion-exchange resin coating 3 is formed as described above, the stripping film 20 is stripped to obtain the desired ion-exchange membrane 10 (Fig. 2(c)).

In the embodiment shown in Fig. 1, the ion-exchange resin 3a is permeating up to the interface between the long filament layer 5a and the extra-fine filament layer 7. So far as the anchoring effect is obtained to a sufficient degree and the desired strength as well as dimensional stability are assured, however, the ion-exchange resin 3a does not have to be reaching the interface between the long filament layer 5a and the extra-fine filament layer 7.

The ion-exchange membrane 10 of the invention thus formed uses the nonwoven fabric sheet 1 as the base sheet, and is very inexpensive improving the strength which is a defect of when the nonwoven fabric sheet is used as the base sheet, having a very large strength (e.g., burst strength of not less than 0.1 MPa as described earlier), and featuring excellent dimensional stability and shape stability. Specifically, since the ion-exchange resin is effectively limited from permeating into the nonwoven fabric sheet 1, the ion-exchange resin coating 3 has a small and uniform thickness without dispersion in the membrane properties such as membrane resistance, being suppressed from excessively swelling when it is brought into contact with the electrolyte, effectively preventing the undulation that stems from the swelling, effectively preventing the bubbles from mixing into the ion-exchange resin coating and, therefore, featuring a small membrane resistance.

Besides, the ion-exchange membrane can be favorably mass-produced, and is industrially very useful, such as being used as a membrane for electrodialysis for producing water and salts, as a membrane for diffuse dialysis, as a diaphragm for cells and as a pressure filter.

EXAMPLES

The invention will now be described in further detail by way of Examples.

Properties of the ion-exchange membranes in Examples and Comparative Examples were found by the measurements described below.

(Measuring the electric resistance)

The ion-exchange membranes produced in Examples and Comparative Examples were held in a two-chamber cell having platinum black electrode plates, a sodium chloride aqueous solution of 0.5 mols/l was filled on both sides of the ion-exchange membranes, a resistance across the electrodes at 25°C was measured relying on an AC bridge (at a frequency of 1000 cycles/sec.), and a difference between the resistance across the electrodes at this moment and the resistance across the electrodes measured without installing the ion-exchange membrane was recorded as a membrane resistance.

The ion-exchange membrane used for the above measurement was the one that had been put to be in an equilibrium state in the sodium chloride aqueous solution of 0.5 mols/l.

(Measuring the burst strength)

The ion-exchange membranes in the wet state obtained at the time of measuring the rate of area change and the rate of thickness change that will be described later, were measured for their burst strengths by using the Mullen burst strength tester (manufactured by Toyo Seiki Seisakusho Co.).

(Measuring the viscosity)

The viscosity of the organic solvent solution (polymer solution) of the ion-exchange resin or the ion-exchange resin precursor was measured by using a rotary cylindrical viscometer, Visco Tester VT-04F (manufactured by Rion Co.).

(Measuring the rate of area change and the rate of thickness change)

The ion-exchange membrane was cut into 50 mm x 50 mm, and was left to stand in a drier maintained at 50 °C for 24 hours so as to be dried to a sufficient degree. The area of the ion-exchange membrane in the dry state was regarded to be S1 and the thickness thereof to be T1. The sample in this dry state was dipped in pure water maintained at 25°C $\pm$ 2°C for 24 hours so as to be wet. The area of the ion-exchange membrane in the wet state was regarded to be S2 and the thickness thereof to be T2. From these values, the rate of area change and the rate of thickness change were calculated in compliance with the following formulas.

$$\text{Rate of area change} = (S2 - S1) \times 100/S1$$

$$\text{Rate of thickness change} = (T2 - T1) \times 100/T1$$

(Measuring the surface roughness)

The arithmetic mean roughness (Ra) of the surface of the ion-exchange membrane was a value found by the following method. By using a color 3D laser microscope, VK-8700 (manufactured by Keyence Co.), the surfaces of the membrane samples were observed through a ten-power objective lens. Suitable places free of impurities were selected in the visual field, and an arithmetic mean roughness Ra was found from the following numerical formula (1). This operation was repeated several times, and an average value thereof was regarded to be Ra.

[Numerical 1]

$$Ra = \frac{1}{N} \sum_{n=1}^{N} |Rn|$$

(Measuring the amount of water permeation)

The ion-exchange membrane was set in a cylindrical pressure filter container (effective filtering area of 10. cm$^2$), pure water was pressurized with 0.1 MPa, and the amount of water that permeated per hour was measured.

<Example 1>

Preparation of a polymer solution:

A polyphenylene oxide was dissolved in chloroform, reacted with a chlorosulfonic acid, neutralized with a sodium hydroxide, and from which the solvent was removed to obtain a sulfonated polyphenelene oxide (cation-exchange resin) having an ion-exchange capacity of 1.6 meq/g.
Next, the sulfonated polyphenelene oxide was dissolved in an N,N-dimethylformamide to prepare a sulfonated polyphenylene oxide solution having a viscosity of 11 dPa·s.

Nonwoven fabric sheet:

A group of filaments obtained from a general-purpose PET by the spun-bond method was extrusion-spun onto the surface of a moving trap net to form a filament web that served as a back surface layer. Onto the above web, a fiber spun by the melt-blown method was directly blown to prepare a laminated web comprising an extra-fine filament layer formed on the filament web. Further, a spun-bond web same as that of the back surface layer was formed on the extra-fine filament layer of the laminated web, followed by the treatment through a flat calender to thereby obtain a nonwoven fabric sheet of a three-layer structure described below having a weight of 70 g/m$^2$ and a thickness of 90 $\mu$m, which was then used as a base sheet. Filament layer on the back surface:

Fiber material: Polyethylene terephthalate (m.p., 260°C)
Fiber diameter: 13 $\mu$m
Weight: 31 g/m$^2$
Intermediate layer (extra-fine filament layer):

Fiber material: Polyethylene terephthalate (m.p., 260°C)
Fiber diameter: 1.7 $\mu$m
Weight: 8 g/m$^2$

Filament layer on the front surface:

Fiber material: Polyethylene terephthalate (m.p., 260°C)
Fiber diameter: 12 $\mu$m
Weight: 31 g/m$^2$

Preparation of an ion-exchange membrane:

By using a bar coater, the polymer solution prepared above was applied onto a PET film so as to possess a liquid thickness of 100 $\mu$m to thereby form an applied layer (cast layer).
Next, by using the PET film forming the cast layer, an ion-exchange resin coating was formed on one surface of the nonwoven fabric sheet. That is, the nonwoven fabric sheet was overlapped on the cast layer and was laminated thereon by being pressed by a roller. This method was regarded as the method A. The rate of lamination at this moment was set to be 10 m/min (when the rate of laminating the nonwoven fabric sheet was set to be larger than the above rate, the polymer solution permeated insufficiently and the nonwoven fabric sheet has peeled off).

Next, the cast layer was dried and solidified by being heated at 60°C and, thereafter, the PET film was stripped to obtain a cation-exchange membrane.

The ion-exchange resin coating on the surface of the nonwoven fabric sheet of the obtained cation-exchange membrane possessed a thickness d of 18 $\mu$m, and exhibited a burst strength of 0.6 MPa, an electric resistance of 2.4 $\Omega$cm$^2$, an exchange capacity of 0.44 meq/g, a rate of area change of 0.8%, a rate of thickness change of 5.0%, a surface roughness of 1.1 $\mu$m and an amount of water permeation of 0 ml/m$^2$·h.

<Example 2>

A cation-exchange membrane was obtained in the same manner as in Example 1 but changing the viscosity of the polymer solution (sulfonated polyphenylene oxide solution) to 50 dPa is and changing the thickness of the cast layer to a liquid thickness of 50 $\mu$m. The rate of laminating the nonwoven fabric sheet was set to be 5 m/min.

The ion-exchange resin coating on the surface of the nonwoven fabric sheet of the obtained cation-exchange membrane possessed a thickness d of 11 $\mu$m, and exhibited a burst strength of 0.6 MPa, an electric resistance of 2.2 $\Omega$cm$^2$, an exchange capacity of 0.28 meq/g, a rate of area change of 0.4%, a rate of thickness change of 3.2%, a surface roughness of 1.5 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 3>

A cation-exchange membrane was obtained in the same manner as in Example 2 but changing the viscosity of the polymer solution (sulfonated polyphenylene oxide solution) to 75 dPa ·s. The rate of laminating the nonwoven fabric sheet was set to be 2.5 m/min.

The ion-exchange resin coating on the surface of the nonwoven fabric sheet of the obtained cation-exchange membrane possessed a thickness d of 13 $\mu$m, and exhibited a burst strength of 0.6 MPa, an electric resistance of 2.1 $\Omega$cm$^2$, an exchange capacity of 0.30 meq/g, a ratio of area change of 0.6%, a ratio of thickness change of 3.8%, a surface roughness of 1.2 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 4>

A cation-exchange membrane was obtained in the same manner as in Example 2 but changing the viscosity of the polymer solution (sulfonated polyphenylene oxide solution) to 32 dPa ·s. The rate of laminating the nonwoven fabric sheet was set to be 7.0 m/min.

The ion-exchange resin coating on the surface of the nonwoven fabric sheet of the obtained cation-exchange membrane possessed a thickness d of 10 $\mu$m, and exhibited a burst strength of 0.6 MPa, an electric resistance of 2.3 $\Omega$cm$^2$, an exchange capacity of 0.26 meg/g, a ratio of area change of 0.2%, a ratio of thickness change of 2.4%, a surface roughness of 1.6 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 5>

A cation-exchange membrane was obtained in the same manner as in Example 1 but changing the viscosity of the polymer solution (sulfonated polyphenylene oxide solution) to 5 dPa ·s. The rate of laminating the nonwoven fabric sheet was set to be 20.0 m/min.

The ion-exchange resin coating on the surface of the nonwoven fabric sheet of the obtained cation-exchange membrane possessed a thickness d of 13 $\mu$m, and exhibited a burst strength of 0.6 MPa, an electric resistance of 3.2 $\Omega$cm$^2$, an exchange capacity of 0.36 meq/g, a ratio of area change of 0.6%, a ratio of thickness change of 3.9%, a surface roughness of 1.2 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 6>

A nonwoven fabric sheet having the following three-layer structure was prepared in the same manner as in Example 1. Filament layers on the front and back surfaces:

Fiber material: Polyethylene terephthalate (m/p., 260°C)
Fiber diameter: 12 $\mu$m
Weight: 12 g/m$^2$
Intermediate layer (extra-fine filament layer):

Fiber material: Polyethylene terephthalate (m/p. , 260°C)
Fiber diameter: 5 $\mu$m
Weight: 15 g/m$^2$

A cation-exchange membrane was obtained in the same manner as in Example 1 but using the above nonwoven fabric sheet. The rate of laminating the nonwoven fabric sheet was set to be 10 m/min.

The ion-exchange resin coating on the surface of the nonwoven fabric sheet of the obtained cation-exchange membrane possessed a thickness d of 21 $\mu$m, and exhibited a burst strength of 0.4 MPa, an electric resistance of 1.8 $\Omega$cm$^2$, an exchange capacity of 0.42 meq/g, a ratio of area change of 0.8%, a ratio of thickness change of 7.8%, a surface roughness of 1.0 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 7>

A polysulfone was chloromethylated and was, next, transformed into a quaternary base thereof with the trimethylamine to prepare an aminated polysulfone which was an anion-exchange resin (ion-exchange capacity of quaternary base, 1.3 meq/g).

The aminated polysulfone, was dissolved in a mixed solvent of methanol and chloroform (volume ratio of 1: 1) to prepare an aminated polysulfone solution of a viscosity of 14 dPa·s.

Preparation of an ion-exchange membrane:

By using a bar coater, the polymer solution prepared above was applied onto a PET film so as to possess a liquid thickness of 100 $\mu$m to thereby form a cast layer.

The nonwoven fabric sheet used in Example 1 was overlapped on the cast layer and was laminated thereon. The rate of laminating the nonwoven fabric sheet was set to be 8 m/min.

Next, the cast layer was dried and solidified by being heated at 60°C and, thereafter, the PET film was stripped to obtain an anion-exchange membrane.

The ion-exchange resin coating on the surface of the nonwoven fabric sheet of the obtained anion-exchange membrane possessed a thickness d of 7 $\mu$m, and exhibited a burst strength of 0.6 MPa, an electric resistance of 2.5 $\Omega$ cm$^2$, an exchange capacity of 0.16 meq/g, a rate of area change of 0.2%, a rate of thickness change of 1.4%, a surface roughness of 1.6 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 8>

Preparation of a polymer solution:

A chloromethylated polystyrene was transformed into a quaternary base thereof with the trimethylamine to prepare an aminated polystyrene which was an anion-exchange resin (ion-exchange capacity of quaternary base, 2.0 meq/g).

The polymer solution was dissolved in chloroform to prepare an aminated polystyrene solution of a viscosity of 1.2 dPa·s.

Preparation of an ion-exchange membrane:

By using a bar coater, the polymer solution prepared above was applied onto a PET film so as to possess a liquid thickness of 100 $\mu$m to thereby form a cast layer.

The nonwoven fabric sheet used in Example 1 was overlapped on the cast layer and was laminated thereon.

The rate of laminating the nonwoven fabric sheet was set to be 40 m/min.

Next, the cast layer was dried and solidified by being heated at 60°C and, thereafter, the PET film was stripped to obtain an anion-exchange membrane.

The ion-exchange resin coating on the surface of the nonwoven fabric sheet of the obtained anion-exchange membrane possessed a thickness d of 5 $\mu$m, and exhibited a burst strength of 0.6 MPa, an electric resistance of 1.8 $\Omega$ cm$^2$, an exchange capacity of 0.25 meq/g, a rate of area change of 0.1%, a rate of thickness change of 1.6%, a surface roughness of 1.7 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Example 9>

A nonwoven fabric sheet having the following three-layer structure was prepared in the same manner as in Example 1. Filament layers on the front and back surfaces:

> Fiber material: Polyethylene terephthalate (m/p., 260°C)
> Fiber diameter: 20 $\mu$m
> Weight: 20 g/m$^2$
> Intermediate layer (extra-fine filament layer):

> Fiber material: Polyethylene terephthalate (m/p., 260°C)
> Fiber diameter: 1.0 $\mu$m
> Weight: 10 g/m$^2$

An anion-exchange membrane was obtained in the same manner as in Example 7 but using the above nonwoven fabric sheet. The rate of laminating the nonwoven fabric sheet was set to be 8 m/min.

The ion-exchange resin coating on the surface of the nonwoven fabric sheet of the obtained anion-exchange membrane possessed a thickness d of 3 $\mu$m, and exhibited a burst strength of 0.7 MPa, an electric resistance of 3.2 $\Omega$ cm$^2$, an exchange capacity of 0.22 meq/g, a rate of area change of 0.1%, a rate of thickness change of 0.6%, a surface roughness of 1.9 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Comparative Example 1>

A nonwoven fabric sheet of only one layer was prepared by the spun-bond method. The nonwoven fabric sheet possessed the following specifications.

> Fiber material: Polyethylene terephthalate (m/p., 260°C)
> Fiber diameter: 15 $\mu$m
> Weight: 50 g/m$^2$

A cation-exchange membrane was obtained in the same manner as in Example 1 but using the above nonwoven fabric sheet. The rate of laminating the nonwoven fabric sheet was set to be 10 m/min.

The ion-exchange resin coating on the surface of the nonwoven fabric sheet of the obtained cation-exchange membrane possessed a thickness d of 2 $\mu$m, and exhibited a burst strength of 0.1 MPa, an electric resistance of 1.0 $\Omega$cm$^2$, an exchange capacity of 0.53 meq/g, a rate of area change of 6%, a rate of thickness change of 12.1% and a surface roughness of 15.0 $\mu$m. The nonwoven fabric consisted of only one layer without staple layer and, therefore, the ion-exchange resin solution has permeated into the whole nonwoven fabric without forming surface coating and permitting water to permeate in an amount of not less than 20,000 ml/m$^2$·h.

When the rate of laminating the nonwoven fabric sheet was set to be larger than the above rate, the polymer solution permeated insufficiently and the nonwoven fabric sheet has peeled off.

<Comparative Example 2>

A nonwoven fabric sheet of only one layer was prepared by the spun-bond method in the same manner as in Comparative Example 1. The nonwoven fabric sheet possessed the following specifications.

Fiber material: Polyethylene terephthalate (m/p., 260°C)
Fiber diameter: 13 $\mu$m
Weight: 20 g/m$^2$

A cation-exchange membrane was obtained in the same manner as in Example 1 but using the above nonwoven fabric sheet. The rate of laminating the nonwoven fabric sheet was set to be 10 m/min.

The ion-exchange resin coating on the surface of the nonwoven fabric sheet of the obtained cation-exchange membrane possessed a thickness d of 7 $\mu$m, and exhibited a burst strength of 0.08 MPa, an electric resistance of 0.8 $\Omega$ cm$^2$, an exchange capacity of 0.89 meq/g, a rate of area change of 21%, a rate of thickness change of 42.3%, a surface roughness of 20.0 $\mu$ m and an amount of water permeation of not less than 20,000 ml/m$^2$ ·h. Due to its low strength, the nonwoven fabric exhibited a large rate of area change and a large rate of thickness change and, further, appeared to be curled and undulated to a large degree.

When the rate of laminating the nonwoven fabric sheet was set to be larger than the above rate, the polymer solution permeated insufficiently and the nonwoven fabric sheet has peeled off.

<Comparative Example 3>

A cation-exchange membrane was obtained in the same manner as in Example 1 but directly coating the nonwoven fabric with the polymer solution. The method of directly coating the nonwoven fabric was regarded as the method B. The rate of coating was set to be 10.0 m/min.

The ion-exchange resin coating on the surface of the nonwoven fabric sheet of the obtained cation-exchange membrane possessed a thickness d of 10 $\mu$m, and exhibited a burst strength of 0.6 MPa, an electric resistance of 8.2 $\Omega$ cm$^2$, an exchange capacity of 0.44 meq/g, a rate of area change of 0.8%, a rate of thickness change of 3.0%, a surface roughness of 11.2 $\mu$m and an amount of water permeation of not less than 20,000 ml/m$^2$ ·h. Since the nonwoven fabric was directly coated, the ion-exchange resin permeated into the nonwoven fabric, and the surface layer was not uniformly formed permitting the surface to become very rough and water to permeate through much.

<Comparative Example 4>

A cation-exchange membrane was obtained in the same manner as in Example 3 but changing the coating thickness to 200 $\mu$m of liquid thickness. The rate of coating was set to be 10.0 m/min.

The ion-exchange resin coating on the surface of the nonwoven fabric sheet of the obtained cation-exchange membrane possessed a thickness d of 25 $\mu$m, and exhibited a burst strength of 0.6 MPa, an electric resistance of 10.6 $\Omega$ cm$^2$, an exchange capacity of 0.67 meq/g, a rate of area change of 1.1%, a rate of thickness change of 7.8%, a surface roughness of 9. 6 $\mu$m and an amount of water permeation of 0 ml/m$^2$·h. Since the nonwoven fabric was directly coated, the ion-exchange resin permeated into the nonwoven fabric, and the electric resistance was large.

<Comparative Example 5>

A cation-exchange membrane was obtained in the same manner as in Example 1 but changing the viscosity of the polymer solution (sulfonated polyphenylene oxide solution) to 100 dPa ·s. The rate of lamination was set to be as very low as 0.1 m/min, and the productivity was poor.

The ion-exchange resin coating on the surface of the nonwoven fabric sheet of the obtained cation-exchange membrane possessed a thickness d of 28 $\mu$m, and exhibited a burst strength of 0.6 MPa, an electric resistance of 3.9 $\Omega$cm$^2$, an exchange capacity of 0.53 meq/g, a rate of area change of 1.6%, a rate of thickness change of 7.1%, a surface roughness of 0.9 $\mu$m and an amount of water permeation of 0 ml/m$^2$·h.

When the rate of laminating the nonwoven fabric sheet was set to be larger than the above rate, the polymer solution permeated insufficiently and the nonwoven fabric sheet has peeled off.

<Comparative Example 6>

A cation-exchange membrane was obtained in the same manner as in Example 1 but changing the viscosity of the polymer solution (sulfonated polyphenylene oxide solution) to 0.2 dPa ·s. The rate of laminating the nonwoven fabric sheet was set to be as 50 m/min. When the rate was set to be larger than the above rate, the polymer solution permeated insufficiently and the nonwoven fabric sheet has peeled off.

The obtained cation-exchange membrane exhibited a burst strength of 0.6 MPa, an electric resistance of 1.5 $\Omega$cm$^2$, an exchange capacity of 0.11 meq/g, a rate of area change of 0.1%, a rate of thickness change of 0.5%, and was favorable. However, since the viscosity of the polymer solution was low, the thickness of the ion-exchange resin coating was irregular on the surface of the nonwoven fabric sheet, pinholes were observed, and the amount of water permeation was not less than 20,000 ml/m$^2$ ·h. Further, since the coating was not sufficiently formed, the surface roughness was as large as 18 $\mu$m.

<Comparative Example 7>

A nonwoven fabric sheet having the following three-layer structure was prepared in the same manner as in Example 1. Filament layers on the front and back surfaces:

Fiber material: Polyethylene terephthalate (m/p., 260°C)
Fiber diameter: 20 $\mu$m
Weight: 20 g/m$^2$
Intermediate layer (extra-fine filament layer):

Fiber material: Polyethylene terephthalate (m/p., 260°C)
Fiber diameter: 10 $\mu$m
Weight: 25 g/m$^2$

A cation-exchange membrane was obtained in the same manner as in Example 1 but using the above nonwoven fabric sheet. The rate of laminating the nonwoven fabric sheet was set to be 15 m/min.
In the thus obtained cation-exchange membrane, the staple layer in the nonwoven fabric sheet was not working for shutting off the permeation of the polymer solution. Therefore, there was formed no ion-exchange resin coating having a uniform thickness on the surface of the nonwoven fabric sheet, and pinholes were observed. The obtained membrane exhibited a burst strength of 0.3 MPa, an exchange capacity of 0.44 meq/g and a rate of thickness change of 2.5%. However, since the cation-exchange resin has permeated too much into the nonwoven fabric sheet, the electric resistance was as high as 7.6 $\Omega$ cm$^2$. Besides, since the strength of the nonwoven fabric sheet was small, the rate of area change was as high as 3.0% and the coating had not been formed to a sufficient degree permitting water to permeate in an amount of not less than 20,000 ml/m$^2$·h. The surface roughness was 5.2 $\mu$m.

<Comparative Example 8>

A nonwoven fabric sheet having the following three-layer structure was prepared in the same manner as in Example 1. Filament layers on the front and back surfaces:

Fiber material: Polyethylene terephthalate (m/p., 260°C)
Fiber diameter: 6 $\mu$m
Weight: 6 g/m$^2$
Intermediate layer (staple layer):

Fiber material: Polyethylene terephthalate (m/p., 260°C)
Fiber diameter: 2 $\mu$m
Weight: 10 g/m$^2$

It was attempted to produce a cation-exchange membrane in the same manner as in Example 1 but using the above nonwoven fabric sheet. However, the nonwoven fabric sheet and the ion-exchange resin coating could not be joined together, the resin layer has peeled off, and the ion-exchange membrane could not be obtained.
Table 1 shows the conditions of experiments in the above Examples and Comparative Examples, and Table 2 shows the results of experiments.
In Table 2, the rate of laminating the nonwoven fabric sheet was shown as productivity.

Table 1

| Example | Kind of resin | Coating method | Exchange capacity | Viscosity of polymer solution | Thickness of cast liquid |
|---------|--------------|----------------|-------------------|-------------------------------|--------------------------|
|         |              |                | meq/g             | dPa·s                         | $\mu$m                   |
| 1       | *1           | A              | 1.6               | 11                            | 100                      |
| 2       | *1           | A              | 1.6               | 50                            | 50                       |

(continued)

| Example | Kind of resin | Coating method | Exchange capacity meq/g | Viscosity of polymer solution dPa·s | Thickness of cast liquid μm |
|---|---|---|---|---|---|
| 3 | *1 | A | 1.6 | 75 | 50 |
| 4 | *1 | A | 1.6 | 32 | 50 |
| 5 | *1 | A | 1.6 | 5 | 100 |
| 6 | *1 | A | 1.6 | 11 | 100 |
| 7 | *2 | A | 1.3 | 14 | 100 |
| 8 | *3 | A | 2 | 1.2 | 100 |
| 9 | *2 | A | 1.3 | 14 | 100 |
| Comp. Ex. 1 | *1 | A | 1.6 | 11 | 100 |
| Comp. Ex. 2 | *1 | A | 1.6 | 11 | 100 |
| Comp. Ex. 3 | *1 | B | 1.6 | 11 | 100 |
| Comp. Ex. 4 | *1 | B | 1.6 | 11 | 200 |
| 10 | *1 | A | 1.6 | 100 | 200 |
| Comp. Ex. 5 | *1 | A | 1.6 | 0.2 | 100 |
| Comp. Ex. 6 | *1 | A | 1.6 | 11 | 100 |
| Comp. Ex. 7 | *1 | A | 1.6 | 11 | 100 |

| | Nonwoven base sheet | | | | | |
|---|---|---|---|---|---|---|
| | Front filament layer | | Intermediate layer | | Back filament layer | |
| | *3 | *4 | *3 | *4 | *3 | *4 |
| Example | μm | g/m² | μm | g/m² | μm | g/m² |
| 1 | 12 | 31 | 1.7 | 8 | 13 | 31 |
| 2 | 12 | 31 | 1.7 | 8 | 13 | 31 |
| 3 | 12 | 31 | 1.7 | 8 | 13 | 31 |
| 4 | 12 | 31 | 1.7 | 8 | 13 | 31 |
| 5 | 12 | 31 | 1.7 | 8 | 13 | 31 |
| 6 | 12 | 12 | 5.0 | 15 | 12 | 12 |
| 7 | 12 | 31 | 1.7 | 8 | 13 | 31 |
| 8 | 12 | 31 | 1.7 | 8 | 13 | 31 |
| 9 | 20 | 20 | 1.0 | 10 | 20 | 20 |
| Comp. Ex. 1 | 15 | 50 | - | - | - | - |
| Comp. Ex. 2 | 13 | 20 | - | - | - | - |
| Comp. Ex. 3 | 12 | 31 | 1.7 | 8 | 13 | 31 |
| Comp. Ex. 4 | 12 | 31 | 1.7 | 8 | 13 | 31 |
| Comp. Ex. 5 | 12 | 31 | 1.7 | 8 | 13 | 31 |
| Comp. Ex. 6 | 12 | 31 | 1.7 | 8 | 13 | 31 |

(continued)

| | Nonwoven base sheet | | | | | |
|---|---|---|---|---|---|---|
| | Front filament layer | | Intermediate layer | | Back filament layer | |
| | *3 | *4 | *3 | *4 | *3 | *4 |
| Example | μm | g/m$^2$ | μm | g/m$^2$ | μm | g/m$^2$ |
| Comp. Ex. 7 | 20 | 20 | 10.0 | 25 | 20 | 20 |
| Comp. Ex. 8 | 6 | 6 | 2.0 | 10 | 6 | 6 |

Coating method A: A cast layer is formed on a PET film and is overlapped on the nonwoven fabric. B: The nonwoven fabric is directly coated.
*1: sulfonated polyphenylene oxide,
*2: aminated polysulfone,
*3: aminated polystyrene
*3: Fiber diameter, *4: Weight

Table 2

| | Productivity | Properties of ion-exchange membrane | | | | | | | |
|---|---|---|---|---|---|---|---|---|---|
| | | *1 | *2 | *3 | *4 | *5 | *6 | *7 | *8 |
| Example | m/min | Mpa | Ωcm$^2$ | meg/g | μm | % | % | um | ml/m$^2$h |
| 1 | 10 | 0.6 | 2.4 | 0.44 | 18 | 0.8 | 5.0 | 1.1 | 0 |
| 2 | 5 | 0.6 | 2.2 | 0.28 | 11 | 0.4 | 3.2 | 1.5 | 0 |
| 3 | 2.5 | 0.6 | 2.1 | 0.30 | 13 | 0.6 | 3.8 | 1.2 | 0 |
| 4 | 7 | 0.6 | 2.3 | 0.26 | 8 | 0.2 | 2.4 | 1.6 | 0 |
| 5 | 20 | 0.6 | 3.2 | 0.36 | 13 | 0.6 | 3.9 | 1.2 | 0 |
| 6 | 10 | 0.4 | 1.8 | 0.42 | 21 | 0.8 | 7.8 | 1.0 | 0 |
| 7 | 8 | 0.6 | 2.5 | 0.16 | 7 | 0.2 | 1.4 | 1.6 | 0 |
| 8 | 40 | 0.6 | 1.8 | 0.25 | 5 | 0.1 | 1.6 | 1.7 | 0 |
| 9 | 8 | 0.7 | 3.2 | 0.22 | 3 | 0.1 | 0.6 | 1.9 | 0 |
| Comp. Ex. 1 | 10 | 0.1 | 1.0 | 0.53 | 2 | 6.0 | 12.1 | 15.0 | >20000 |
| Comp. Ex. 2 | 10 | 0.08 | 0.8 | 0.89 | 7 | 21.0 | 42.3 | 20.0 | >20000 |
| Comp. Ex. 3 | 10 | 0.6 | 8.2 | 0.44 | 10 | 0.8 | 3.0 | 11.2 | >20000 |
| Comp. Ex. 4 | 10 | 0.6 | 10.6 | 0.67 | 25 | 1.1 | 7.8 | 9.6 | 0 |
| Comp. Ex. 5 | 0.1 | 0.6 | 3.9 | 0.53 | 28 | 1.6 | 7.1 | 0.9 | 0 |
| Comp. Ex. 6 | 50 | 0.6 | 1.5 | 0.11 | - | 0.1 | 0.5 | 18.0 | >20000 |
| Comp. Ex. 7 | 15 | 0.3 | 7.6 | 0.44 | - | 3.0 | 2.5 | 5.2 | >20000 |
| Comp. Ex. 8 | - | - | - | - | - | - | - | - | - |

*1: Bursting strength, *2: Electric resistance, *3: Exchange capacity,
*4: Surface layer thickness d, *5: Area change, *6: Thickness change,
*7: Surface roughness, *8: Water permeation

Description of Reference Numerals:

1: Nonwoven fabric sheet
3: Ion-exchange resin coating
5: Long filament layers
7: Extra-fine filament layer

**Claims**

1. A process for producing an ion-exchange membrane comprising steps of:

providing a nonwoven fabric sheet having a fiber layer structure that includes long filament layers of a fiber diameter of 8 to 30 $\mu$m on both surfaces thereof and an extra-fine filament layer of a fiber diameter of not more than 5 $\mu$m as an intermediate layer formed by melt-adhesion of fibers between said long filament layers, a strippable film, and an organic solvent solution of an ion-exchange resin or an ion-exchange resin precursor that is capable of introducing ion-exchange groups, wherein said organic solvent solution has a viscosity at 25 °C in a range of 1.0 to 60 dPa·s; applying said organic solvent solution onto one surface of said strippable film to form an applied layer of the ion-exchange resin or the ion-exchange resin precursor;
overlapping said nonwoven fabric sheet on said applied layer;
forming a coating of the ion-exchange resin or the ion-exchange resin precursor by drying said applied layer in a state where said nonwoven fabric sheet has been overlapped thereon; and
stripping said strippable film;
wherein when an organic solvent solution of said ion-exchange resin precursor is used as said organic solvent solution, provision is, further, made of a step of introducing ion-exchange groups into said ion-exchange resin precursor after the coating of the ion-exchange resin precursor has been formed but before stripping said strippable film.

2. An ion-exchange membrane comprising a nonwoven fabric sheet and an ion-exchange resin coating formed on one surface of said nonwoven fabric sheet, said nonwoven fabric sheet having a fiber layer structure that includes long filament layers of a fiber diameter of 8 to 30 $\mu$m on both surfaces thereof and an extra-fine filament layer of a fiber diameter of not more than 5 $\mu$m as an intermediate layer formed by melt-adhesion of fibers between said long filament layers;
wherein said ion-exchange membrane has a burst strength of not less than 0.1 MPa, an electric resistance at 25 °C of not more than 5 $\Omega$ cm$^2$, and an amount of water permeation therethrough of not more than 100 ml/m$^2$.h; and wherein said ion-exchange membrane is obtainable by the process defined in claim 1.

3. The ion-exchange membrane according to claim 2, wherein said ion-exchange membrane has a rate of area change of not more than 2% and a rate of thickness change of not more than 10% in a dry state of after it is held in a dry atmosphere of 50°C for 24 hours and in a wet state of after it is dipped in pure water of 25°C for 24 hours, and a surface roughness Ra of not more than 10 $\mu$m on a surface of the ion-exchange resin coating of the ion-exchange membrane in said wet state.


**Patentansprüche**

1. Verfahren zur Herstellung einer Ionenaustauschmembran, umfassend die folgenden Stufen:

Bereitstellen eines Vliesstoffes mit einer Faserschichtstruktur, die Langfäden-Schichten mit einem Faserdurchmesser von 8 bis 30 $\mu$m auf ihren beiden Oberflächen und eine Schicht aus extrafeinen Fäden mit einem Faserdurchmesser von nicht mehr als 5 $\mu$m als Zwischenschicht, die durch Schmelzverklebung von Fasern zwischen den Langfäden-Schichten gebildet ist, umfasst; eines Abziehfilms; und einer Lösung eines Ionenaustauschharzes oder einer Vorstufe eines Ionenaustauschharzes, in die Ionenaustauschgruppen eingeführt werden können, in einem organischen Lösungsmittel, wobei das organische Lösungsmittel eine Viskosität bei 25 °C im Bereich von 1,0 bis 60 dPa·s aufweist;
Auftragen der Lösung im organischen Lösungsmittel auf eine Oberfläche des Abziehfilms, um eine Auftrageschicht des Ionenaustauschharzes oder der Vorstufe des Ionenaustauschharzes zu bilden;
Überlagern des Faservliesstoffes auf die Auftrageschicht;
Bilden eines Überzugs aus dem Ionenaustauschharz oder der Vorstufe des Ionenaustauschharzes durch Trocknen der Auftrageschicht in einem Zustand, bei dem der Faservliesstoff überlagert ist; und
Abziehen des Abziehfilms;
wobei dann, wenn eine Lösung einer Vorstufe eines Ionenaustauschharzes als Lösung im organischen Lösungsmittel verwendet wird, ferner dafür gesorgt wird, dass eine Stufe zur Einführung von Ionenaustauschgruppen in die Vorstufe des Ionenaustauschharzes durchgeführt wird, nachdem der Überzug aus der Vorstufe des Ionenaustauschharzes gebildet worden ist, aber bevor der Abziehfilm abgestreift wird.

**2.** Ionenaustauschmembran, umfassend einen Vliesstoff und einen auf einer Oberfläche des Vliesstoffes gebildeten Ionenaustauschharz-Überzug, wobei der Vliesstoff eine Faserschichtstruktur aufweist, die Langfäden-Schichten mit einem Faserdurchmesser von 8 bis 30 $\mu$m auf ihren beiden Oberflächen und eine Schicht aus extrafeinen Fäden mit einem Faserdurchmesser von nicht mehr als 5 $\mu$m als Zwischenschicht, die durch Schmelzverklebung von Fasern zwischen den Langfäden-Schichten gebildet ist, umfasst;
wobei die Ionenaustauschmembran eine Berstfestigkeit von nicht unter 0,1 MPa, einen elektrischen Widerstand bei 25 °C von nicht mehr als 5 $\Omega$ cm$^2$ und eine Wasserdurchlässigkeit von nicht mehr als 100 ml/m$^2$·h aufweist; und wobei die Ionenaustauschmembran durch das Verfahren nach Anspruch 1 erhältlich ist.

**3.** Ionenaustauschmembran nach Anspruch 2, wobei die Ionenaustauschmembran eine Flächenveränderungsrate von nicht mehr als 2 % und eine Dickenveränderungsrate von nicht mehr als 10 % in trockenem Zustand, nachdem sie 24 Stunden in einer trockenen Atmosphäre von 50 °C gehalten worden ist, und in nassem Zustand, nachdem sie 24 Stunden in reines Wasser von 25 °C getaucht worden ist, sowie eine Oberflächenrauigkeit Ra von nicht mehr als 10 $\mu$m auf einer Oberfläche des Ionenaustauschharz-Überzugs der Ionenaustauschmembran in nassem Zustand aufweist

**Revendications**

**1.** Procédé pour produire une membrane échangeuse d'ions comprenant les étapes de :

fournir une nappe d'étoffe non tissée ayant une structure à couches de fibres qui inclut des couches de filaments longs d'un diamètre de fibre de 8 à 30 $\mu$m sur les deux surfaces de celles-ci et une couche de filaments extra-fins d'un diamètre de fibre non supérieur à 5 $\mu$m en tant que couche intermédiaire formée par fusion-adhésion de fibres entre lesdites couches de filaments longs, un film pelable, et une solution de solvant organique d'une résine échangeuse d'ions ou d'un précurseur de résine échangeuse d'ions qui est capable d'introduire des groupes échangeurs d'ions, dans lequel ladite solution de solvant organique a une viscosité à 25 °C dans un intervalle de 1,0 à 60 dPa.s ;
appliquer ladite solution de solvant organique sur une surface dudit film pelable pour former une couche appliquée de la résine échangeuse d'ions ou du précurseur de résine échangeuse d'ions ;
recouvrir ladite couche appliquée de ladite nappe d'étoffe non tissée;
former un revêtement de la résine échangeuse d'ions ou du précurseur de résine échangeuse d'ions en séchant ladite couche appliquée dans un état où ladite nappe d'étoffe non tissée a été déposée sur celle-ci ; et
peler ledit film pelable ;
dans lequel lorsqu'une solution de solvant organique dudit précurseur de résine échangeuse d'ions est utilisée en tant que ladite solution de solvant organique, il est en outre prévu une étape d'introduction de groupes échangeur d'ions dans ledit précurseur de résine échangeuse d'ions après que le revêtement du précurseur de résine échangeuse d'ions a été formé mais avant de peler ledit film pelable.

**2.** Membrane échangeuse d'ions comprenant une nappe d'étoffe non tissée et un revêtement de résine échangeuse d'ions formé sur une surface de ladite nappe d'étoffe non tissée, ladite nappe d'étoffe non tissée ayant une structure à couches de fibres qui inclut des couches de filaments longs d'un diamètre de fibre de 8 à 30 $\mu$m sur les deux surfaces de celles-ci et une couche de filaments extra-fins d'un diamètre de fibre non supérieur à 5 $\mu$m en tant que couche intermédiaire formée par fusion-adhésion de fibres entre lesdites couches de filaments longs ;
dans laquelle ladite membrane échangeuse d'ions a une résistance à l'éclatement non inférieure à 0,1 MPa, une résistance électrique à 25 °C non supérieure à 5 $\Omega$cm$^2$, et une quantité de perméation d'eau à travers celle-ci non supérieure à 100 ml/m$^2$.h ; et
dans laquelle ladite membrane échangeuse d'ions peut être obtenue par le procédé défini à la revendication 1.

**3.** Membrane échangeuse d'ions selon la revendication 2, dans laquelle ladite membrane échangeuse d'ions a un taux de variation de surface non supérieur à 2 % et un taux de variation d'épaisseur non supérieur à 10 % dans un état sec après qu'elle a été maintenue dans une atmosphère sèche à 50 °C pendant 24 heures et dans un état humide après qu'elle a été plongée dans de l'eau pure à 25 °C pendant 24 heures, et une rugosité de surface Ra non supérieure à 10 $\mu$m sur une surface du revêtement de résine échangeuse d'ions de la membrane échangeuse d'ions dans ledit état humide.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080138596 A
- JP 6422932 A
- JP 2265929 A